# FASCICULE DE BREVET EUROPEEN

(11) **EP 1 634 737 B1**
(45) Date de publication et mention de la délivrance du brevet: **05.09.2007**
(21) Numéro de dépôt: 05017219.6
(22) Date de dépôt: 08.08.2005
(51) Int. Cl.: B60H 1/00

(54) **Support équipé de moyens d'absorption de vibrations pour moteur de pulseur**
Träger mit Mitteln zur Absorption von Vibrationen eines Lüftermotors
Support equipped with vibration absorbing means for a fan motor

(30) Priorité: 17.08.2004 FR 0408924
(43) Date de publication de la demande: 15.03.2006
(73) Titulaire: VALEO SYSTEMES THERMIQUES, 78320 Le Mesnil Saint-Denis (FR)
(72) Inventeur: Geroux, Pierre-Arnaud, 78400 Chatou (FR); Talaucher, Stéphane, 78830 Bonnelles (FR)

(56) Documents cités:
- EP-A- 0 800 000
- EP-A- 1 107 432
- DE-A1- 19 712 228
- US-A- 5 533 704
- US-B1- 6 505 807

## Description

L'invention se rapporte à un support équipé de moyens d'absorption de vibrations pour un moteur, notamment de pulseur d'appareil de chauffage, de ventilation, et/ou de climatisation de véhicule automobile.

Dans les véhicules actuels, l'appareil de chauffage, de ventilation, et/ou de climatisation comprend, de manière connue et habituelle, un pulseur à aubes équipé d'un moteur rotatif monté sur un support. Or, du fait de la rotation de l'arbre moteur du pulseur entraînant les aubes de propulsion d'air, des vibrations peuvent être produites à différentes fréquences selon la vitesse de rotation dudit arbre, son balourd et les bruits émis directement par ledit moteur. Ces bruits et vibrations peuvent ainsi se transmettre à d'autres pièces de l'appareil de chauffage, de ventilation, et/ou de climatisation, notamment à la planche de bord, qui elle-même peut les diffuser aux bouches d'aérations, à des pièces de fixation telles que des clips, des bagues de montage, des vis, ou à des pièces mobiles comme des couvercles de boîtes à gants, etc.

De telles vibrations peuvent être particulièrement gênantes tant d'un point de vue acoustique, pour le confort des passagers du véhicule, qu'au niveau de l'usure des pièces qui entrent en vibration et se détériorent ou bien qui risquent de se détacher.

Des moyens ont été développés par le passé pour pallier cet inconvénient, comme ceux décrits dans le document de Brevet EP-B-800 000. De plus, US 5533704 montre un support avec des moyens surmoulés Ainsi, afin d'éviter la propagation des vibrations produites par le moteur vers le support du moteur, il est prévu d'isoler acoustiquement ledit moteur à l'aide de plots en matériau de type caoutchouc. L'inconvénient de ces moyens réside dans le fait qu'ils ne permettent pas d'absorber toutes les vibrations produites par le moteur, c'est-à-dire toute une gamme de fréquences de vibrations.

En effet, le déséquilibre ou le balourd du moteur crée des vibrations ayant des fréquences entre 0 et 50 Hz lorsque l'arbre tourne à une vitesse comprise entre environ 0 et 3000 tours/min.

Par ailleurs, les harmoniques créées par le couple de rotation du moteur opèrent à une fréquence comprise entre environ 160 et 4000 Hz.

De plus, des bruits de cliquetis sont créés lors du frottement des balais de contact sur les pistes électriques de l'alimentation du moteur à des fréquences comprises entre 2000 et 8000 Hz.

Un but de la présente invention est ainsi de minimiser et, préférentiellement, de supprimer ces vibrations pour éviter qu'elles se propagent du moteur à son support.

Ainsi, les dispositifs de l'art antérieur ne permettent pas de découpler correctement le moteur de son support, de réduire la transmission des vibrations provoquées par le déséquilibre du moteur, et de résister aux chocs externes. Du fait de la configuration de ces dispositifs du traitement des vibrations réalisé par découplage, l'isolation ne peut pas s'établir correctement car les contraintes agissent dans des directions différentes. Le choix de la matière utilisée pour l'isolant est également problématique car il faut à la fois une certaine rigidité pour supporter les vibrations externes et pour éviter d'amplifier le déséquilibre du moteur, et une certaine souplesse pour réduire la transmission des bruits.

En outre, les dispositifs de l'art antérieur manquent de fiabilité dans le temps, notamment en fonction des conditions climatiques et mécaniques entourant le moteur. Il conviendrait donc de prévoir, dès la conception, une réduction massive de la transmission des vibrations afin d'éviter un taux élevé de pièces défaillantes, coûteux et nuisible à la qualité du produit. De plus, les dispositifs s'usant rapidement, l'absorption des vibrations diminue, augmentant ainsi l'inconfort des passagers et le risque de destruction de pièces.

Enfin, le démontage du moteur lors d'une réparation ou d'un remplacement est délicat et complexe à mettre en oeuvre.

Pour résoudre ces problèmes, la présente invention propose d'intégrer des moyens d'absorption de vibrations au support.

Plus précisément, l'invention se rapporte à un support pour moteur, notamment de pulseur d'appareil de chauffage, de ventilation, et/ou de climatisation de véhicule automobile, le moteur présentant un axe de révolution et le support comprenant un manchon creux sensiblement cylindrique destiné à recevoir le moteur, un boîtier de fixation destiné à recevoir le manchon creux, et des moyens d'absorption de vibrations, dans lequel lesdits moyens d'absorption des vibrations sont surmoulés sur le boîtier de fixation, de manière à coopérer avec le manchon et les moyens d'absorption des vibrations comprennent en outre au moins un cordon longitudinal coopérant avec une paroi externe du manchon.

Selon des modes de réalisation préférés de la présente invention :
- le manchon est muni d'au moins un doigt de guidage,
- les moyens d'absorption des vibrations comprennent au moins un plot coopérant avec le doigt de guidage,
- chaque plot présente la forme d'un cylindre et un orifice central traversant dans lequel est ajusté le doigt de guidage du manchon,
- chaque plot mesure sensiblement de 4 à 10 mm de hauteur axiale et présente une épaisseur radiale de matière autour de l'orifice d'au moins 2 mm,
- les plots d'isolation sont au nombre de trois,
- le cordon longitudinal est solidaire d'une paroi interne du support de fixation et est en contact avec la paroi externe du manchon,
- les cordons sont au nombre de trois,
- chaque cordon présente une longueur axiale d'au moins 20 mm et une épaisseur radiale d'au moins 1 mm,
- les plots d'isolation et les cordons sont alternés et décalés angulairement les uns par rapport aux autres d'environ 60°,
- les plots et/ou les cordons sont surmoulés d'une seule pièce sur le boîtier de fixation,
- les moyens d'absorption des vibrations sont à base d'un matériau élastiquement déformable, tel qu'un élastomère, et
- le matériau est un élastomère thermoplastique ayant une dureté Shore comprise entre environ 20 et 30, idéalement 25.

D'autres caractéristiques, détails et avantages de l'invention ressortiront à la lecture de la description qui suit, faite en référence aux dessins annexés donnés à titre d'exemple et qui représentent respectivement :
- les figures 1 et 2, des vues en perspective éclatée d'un support de moteur de pulseur rotatif conforme à la présente invention
- la figure 3, une vue en perspective d'un moteur rotatif de pulseur destiné à être monté sur le support de la présente invention,
- la figure 4, une vue de détail en perspective des moyens d'absorption des vibrations dont est munie le support,
- la figure 5, une vue en perspective éclatée illustrant la coopération entre les moyens d'absorption des vibrations et un manchon tubulaire du support,

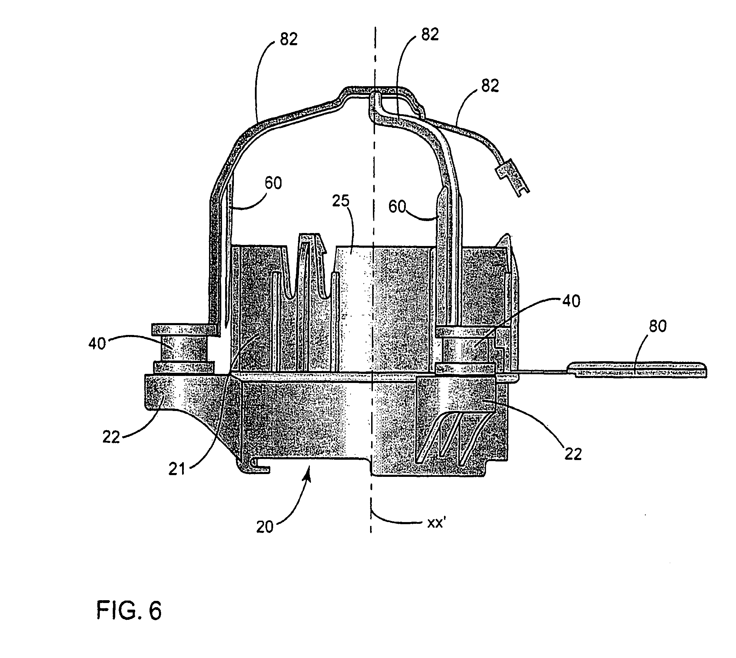

- la figure 6, une vue de côté du manchon une fois au contact des moyens d'absorption des vibrations,
- la figure 7, une vue en coupe des moyens de la figure 4,
- les figures 8 à 10, des vues en coupe longitudinale (i.e. axiale) des plots d'isolation, et
- les figures 11 à 13, des vues en coupe transversale (i.e. radiale) des plots d'isolation.

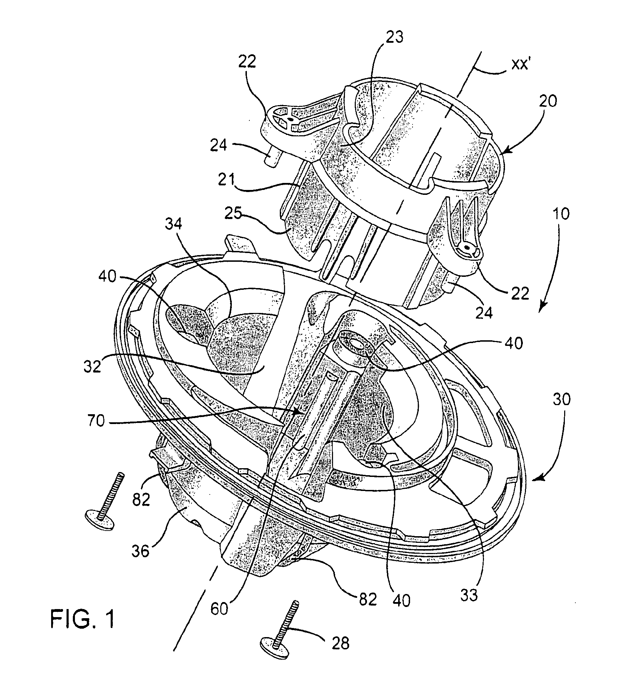

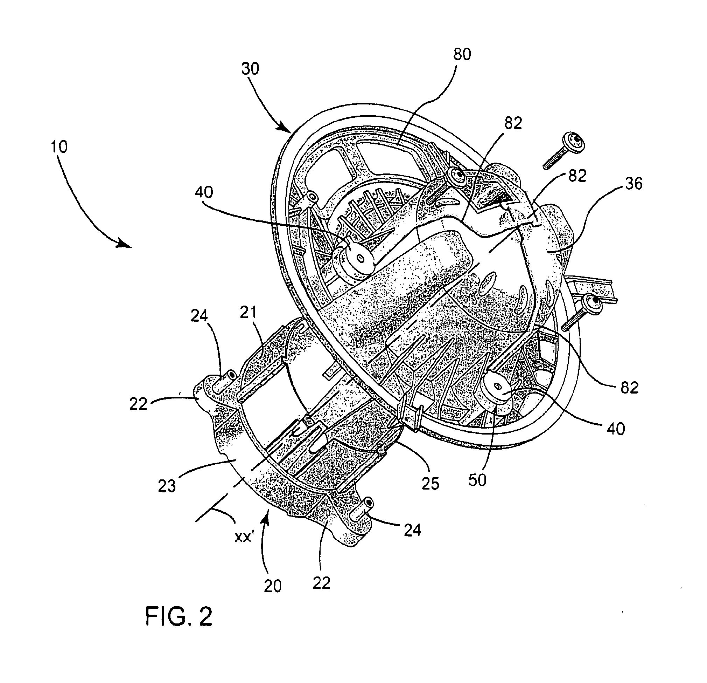

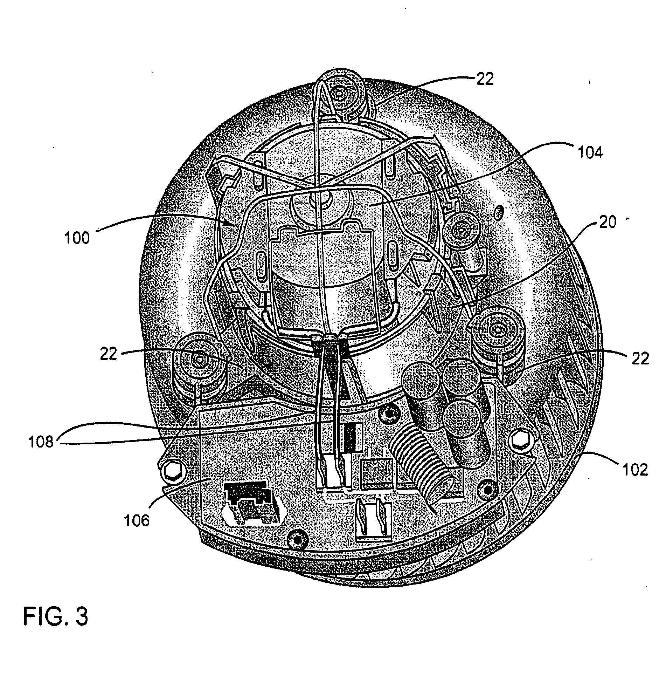

Les figures 1 et 2 représentent chacune une vue en perspective éclatée selon un angle de vue différent d'un support 10 pour moteur rotatif 100 de pulseur à roue à aubes 102 qui est représenté plus en détail en perspective sur la figure 3.

Ce support 10 comprend, conformément au mode de réalisation préféré de la présente invention, un manchon central 20 allongé ayant sensiblement la forme d'un cylindre de révolution d'axe de révolution XX' et de section sensiblement circulaire. Ce manchon 20 est prévu pour recevoir intérieurement le corps 104 du moteur rotatif 100 de la figure 3, ainsi que diverses connexions électriques entre ledit moteur 100 et des éléments externes, tels qu'une carte électronique 106 et une alimentation électrique 108.

Le manchon 20, typiquement réalisé par moulage en matière plastique rigide, telle que du polypropylène, se compose d'une paroi externe 21 présentant un anneau supérieur 23 et un anneau inférieur 25. Le manchon 20 est muni de trois bras de montage 22 s'étendant radialement vers l'extérieur à partir de la paroi externe 21, à proximité de l'anneau supérieur 23. Ces trois bras de montage 22, qui sont nervurés pour augmenter leur rigidité, sont chacun munis d'un doigt de guidage 24, s'étendant axialement de l'anneau supérieur 23 vers l'anneau inférieur 25 du manchon 20. Ces doigts de guidage 24 présentent une forme globalement cylindrique creuse à section interne et externe circulaire et mesurent sensiblement 10 à 15 mm de longueur, de préférence 12,5 mm, et environ 5 à 7 mm de diamètre externe, de préférence 6 mm. Les trois bras 22, et donc les trois doigts de guidage 24, sont disposés sur une même circonférence, sur un même plan et sont répartis, de façon préférentielle, angulairement à 120° les uns des autres de manière à former un triangle équilatéral. Cette configuration permet d'améliorer la stabilité du moteur 100 et l'absorption des vibrations qu'il produit en tournant et en oscillant autour de son axe de rotation, lorsque le centre de gravité du moteur et de son aube coïncide avec le barycentre du triangle formé par les doigts de guidage 24.

Le support 10 de la présente invention comprend par ailleurs un boîtier de fixation 30 de forme complexe prévue pour s'adapter au moteur rotatif 100 et à d'autres éléments complémentaires pouvant s'intégrer au support 10 ou être placés autour dudit support 10. Le boîtier de fixation 30, typiquement réalisé par moulage en matière plastique rigide, telle que du polypropylène, comprend un logement creux 32 en forme de fût présentant une paroi interne 33, une ouverture 34 et un dôme 36 de fermeture opposé à l'ouverture 34. Ce logement creux 32, en forme de cylindre à section circulaire, est destiné à recevoir une partie au moins du manchon allongé 20 logeant le moteur rotatif 100.

Le boîtier de fixation 30 comprend, à la périphérie du logement creux 32 et en léger contrebas de son ouverture, trois plots d'isolation 40 formant des premiers moyens d'absorption des vibrations 50. Ces plots d'isolation 40 sont réalisés en caoutchouc souple et absorbant acoustique tel qu'un élastomère thermoplastique, par exemple à base d'EPDM.

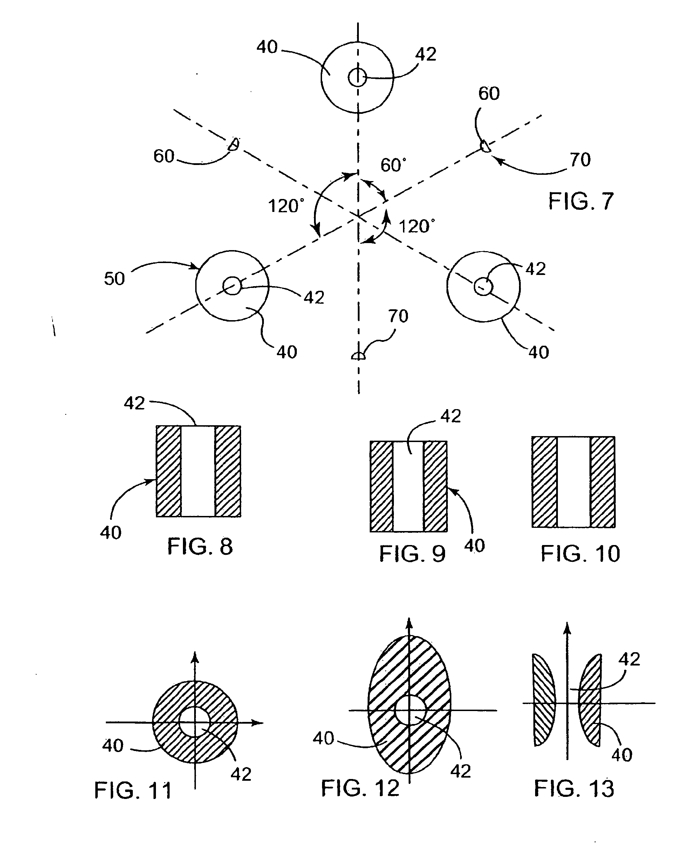

Les trois plots d'isolation 40 sont disposés sur une même circonférence, sur un même plan et sont répartis angulairement, de manière préférée, à 120° les uns des autres de manière à former un triangle équilatéral, comme cela est visible sur la figure 7. Cette configuration permet d'obtenir un bon isostatisme de l'isolation acoustique fournie par ces plots d'isolation 40 pour les mêmes raisons que celles évoquées concernant les doigts de guidage 24, c'est-à-dire dans le cas où le centre de gravité du moteur et de son aube (et accessoirement d'autres éléments fixes tels que des composants électroniques) coïncide avec le barycentre du triangle formé par les plots d'isolation 40.

Le manchon 20 est prévu pour se monter à l'intérieur du logement creux 32 du boîtier 30, de sorte que les plots d'isolation 40 reçoivent respectivement les doigts de guidage 24 du manchon 20. Des moyens de maintien axial du manchon 20 sur le boîtier de fixation 30 se présentent sous la forme de trois vis 28 pénétrant à l'intérieur des doigts de guidage 24 qui présentent une section interne circulaire.

Une fois le moteur rotatif 100 monté à l'intérieur du manchon 20, et le manchon 20 monté à l'intérieur du boîtier de fixation 30, comme cela est représenté sur la figure 3, le plan dans lequel se trouvent les trois plots d'isolation 40 passe au plus près du centre de gravité de l'ensemble constitué par le moteur 100 et sa roue à aube 102. Cette solution permet de réduire l'effet de levier et le déséquilibre, ou balourd, du moteur 100 lorsque ce dernier oscille en tournant.

Les plots d'isolation 40 sont surmoulés directement sur le corps du boîtier de fixation 30 pour des questions de facilité de réalisation et d'amélioration des performances du support en terme d'absorption des vibrations. De préférence, le matériau utilisé est un élastomère thermoplastique de dureté Shore d'environ 25, ce qui permet d'absorber les vibrations se produisant entre sensiblement 2 kHz et 10 kHz.

Comme cela est visible sur les figures 8 à 13, les plots d'isolation 40 peuvent présenter différentes formes afin de recevoir les doigts de guidage 24 du manchon 20. De manière générale, chaque plot d'isolation 40 a la forme d'un cylindre de section transversale soit annulaire de différentes épaisseurs (figures 8, 11 et 13), soit elliptique non circulaire d'épaisseur variable (figures 9 et 12), et à section longitudinale interne droite ou hyperbolique (figures 10 et 13 respectivement). Par ailleurs, la section transversale interne de l'orifice traversant 42 est préférentiellement circulaire, mais elle peut également être elliptique non circulaire, pour s'adapter à des doigts de guidage 24 ayant eux-mêmes une section transversale externe elliptique circulaire ou non.

Le choix de l'épaisseur radiale de matière constituant les plots d'isolation 40 est guidé par le type d'absorption désiré, notamment la fréquence des vibrations et leur direction de propagation. Il convient de prévoir un juste compromis en termes d'épaisseur de matière, pour à la fois absorber le maximum de vibrations et permettre une bonne stabilité du moteur 100 lorsqu'il tourne et oscille autour de son centre de gravité.

Dans le mode de réalisation présenté, les plots d'isolation 40 sont des cylindres de section annulaire mesurant sensiblement au moins 8 mm de hauteur axiale pour une épaisseur radiale de matière d'environ 2mm au minimum.

Le boîtier de fixation 30 est par ailleurs muni de trois cordons longitudinaux 60 pour former des seconds moyens 70 d'absorption des vibrations. Ces cordons longitudinaux 60 sont réalisés en un matériau caoutchouc, tel qu'un élastomère thermoplastique. Les trois cordons longitudinaux 60 s'étendent axialement sur la paroi interne 33 du logement creux 32. Les cordons longitudinaux 60 sont ainsi disposés sur une circonférence commune et sont répartis angulairement de manière préférentielle à 120° les uns des autres pour former, vus en coupe, un triangle équilatéral. Cette configuration permet d'obtenir un bon isostatisme de l'isolation acoustique fournie par ces cordons, comme pour les plots d'isolation 40.

Comme cela est notamment visible sur la figure 7, les plots d'isolation 40 et les cordons longitudinaux 60 sont alternés et décalés angulairement de 60° les uns des autres pour une répartition optimale de l'absorption des vibrations.

Avantageusement, les cordons longitudinaux 60 mesurent environ 20 mm de longueur axiale pour une épaisseur radiale d'environ 1 mm afin d'absorber plus spécifiquement les basses fréquences. Une fois le manchon 20 monté dans le boîtier 30, la paroi externe 21 dudit manchon 20 appuie sur les cordons longitudinaux 60 avec un jeu nul, voire en les écrasant légèrement. Il est préférable que le taux de compression des cordons longitudinaux 60 soit inférieur à celui des plots d'isolation 40 pour éviter de court-circuiter l'effet absorbant des plots d'isolation 40. De façon préférentielle, ce sont les plots d'isolation 40 qui absorbent en premier les vibrations, puis les cordons longitudinaux 60 lorsque la compression des plots d'isolation 40 dépasse un certain seuil.

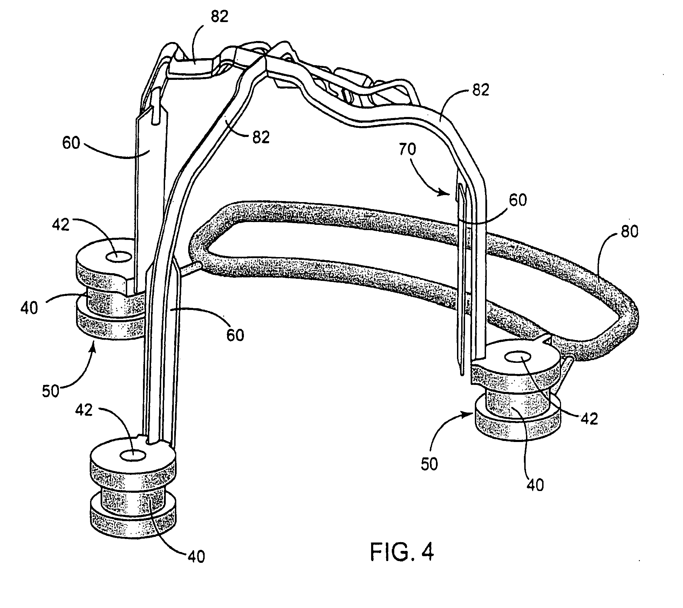

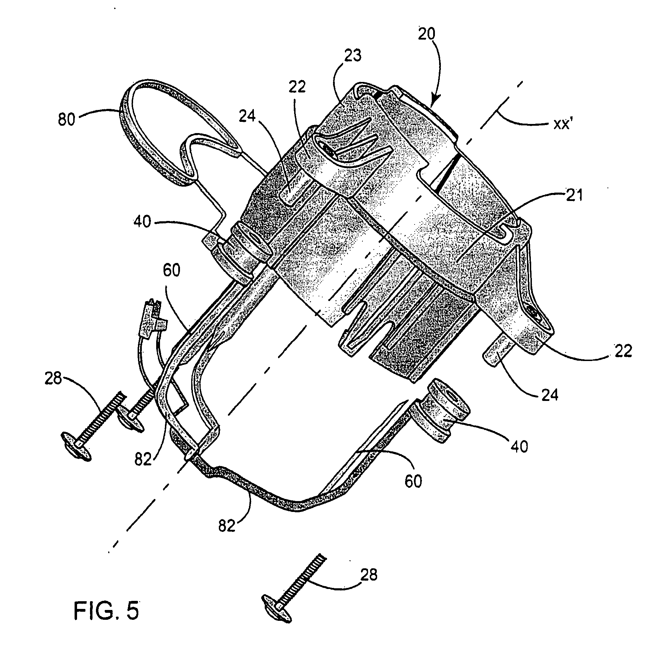

Comme cela est visible en particulier sur les figures 4 et 5, les plots d'isolation 40 et les cordons longitudinaux 60 forment un ensemble unitaire surmoulé en une seule étape sur le boîtier de fixation 30. Afin de réaliser facilement cette opération de surmoulage, des cordons de liaison 80 et 82 relient entre eux les plots 40 et/ou les cordons longitudinaux 60. Ainsi, les cordons 82 en élastomère relient les cordons longitudinaux 60 entre eux et apparaissent sur l'extérieur du boîtier de fixation 30, tandis que le cordon 80 en élastomère s'insère dans une rainure du boîtier de fixation 30 et relie deux des trois plots d'isolation 40 entre eux.

La combinaison des trois plots d'isolation 40 et des trois cordons longitudinaux 60 permet une absorption optimale des vibrations qui, sans la présence de ces moyens 50 et 70, se propageraient du moteur rotatif 100 à une planche de bord (non représentée). Cette combinaison permet un découplage des différentes contraintes que doit supporter le support en termes de vibrations acoustiques. Les plots d'isolation 40 permettent ainsi d'absorber les petites déformations en torsion et de découpler le moteur rotatif 100, tandis que les cordons 60 agissent plus particulièrement sur les déformations radiales à fort déplacement et permettent d'éviter la fatigue des plots d'isolation 40, la propagation des vibrations à basses fréquences dans toutes les directions en mode de torsion, et la propagation des vibrations à basses fréquences (0-300Hz) en mode longitudinal et radial. De plus, cette combinaison tient compte à la fois des déformations ou vibrations en torsion selon les trois axes, mais également en translation selon ces trois axes.

Les avantages procurés par la solution technique retenue dans la présente invention sont les suivants :
- isolation des vibrations au plus près de la source ;
- possibilité de réaliser en même temps trois plots d'isolation et trois cordons longitudinaux, ce qui permet d'obtenir une réalisation mécaniquement isostatique ;
- la position des plots d'isolation et des cordons longitudinaux respectivement à sensiblement 120° les uns des autres, ainsi que le décalage angulaire des plots et des cordons entre eux d'un angle d'environ 60°, assure une répartition optimale de l'isolation ;
- le manchon permet, de par sa conception ouverte, de recevoir tout type de moteur à courant continu, la seule exigence concernant le moteur étant relative à son encombrement et à la présence de contacteurs électriques accessibles ;
- l'utilisation de matériaux différents et/ou de duretés Shore différentes d'un plot/cordon à l'autre et/ou entre les plots et les cordons, ainsi que l'épaisseur et/ou la forme des plots/cordons, permettent de s'approcher au plus près de l'absorption idéale des vibrations ;
- le surmoulage du polypropylène par un élastomère thermoplastique permet de concevoir un procédé de fabrication simple, rapide et robuste ;
- le choix des matériaux est guidé par le fait qu'ils se mélangent très bien, ce qui améliore la transmission des vibrations d'un matériau à l'autre,

Il doit être bien entendu toutefois que la description détaillée, donnée uniquement à titre d'illustration de l'objet de l'Invention, ne constitue en aucune manière une limitation, les équivalents techniques étant également compris dans le champ de la présente invention.

Ainsi, le support peut être utilisé pour un pulseur de circulation d'air d'un siège automobile, pour un extracteur d'air ou pour une unité annexe de propulsion d'air d'un appareil de chauffage, de ventilation, et/ou de climatisation, par exemple pour sièges arrières de véhicule.

En variante de réalisation, le manchon peut être muni radialement de trois lames articulées et affinées tels des charnières films au niveau de la paroi externe du manchon et de la zone de contact entre le manchon et le boîtier, de manière à permettre une certaine flexibilité en torsion entre le manchon et le boîtier. Le nombre de lames articulées est de préférence égal à 3, et elles sont réparties angulairement à 120° les unes des autres. La section des lames peut être circulaire, rectangulaire, triangulaire, ovale, et elle peut varier axialement et/ou radialement.

Les plots d'isolation 40 et/ou les cordons longitudinaux 60 peuvent, de manière complémentaire, être également surmoulés sur le manchon.

Les cordons longitudinaux 60 peuvent également présenter des zones de contact singulières avec le manchon, par exemple, elles peuvent être formés par une pluralité de petites bosses alignées et étant chacune en contact ponctuel avec ledit manchon.

Le nombre de plots et/ou de cordons peut également être supérieur à trois pour des configurations particulières d'absorption acoustique ou des formes de boîtier et/ou de manchon.

Ainsi, dans le cas ou le centre de gravité de l'ensemble constitué par le moteur et sa roue à aube est excentré par rapport à son axe de rotation, la solution consistant à placer les plots et/ou les cordons respectivement à 120° les uns des autres n'est plus la solution idéale, car le barycentre du triangle équilatéral ainsi formé ne coïncide pas avec celui de l'ensemble défini précédemment. Il convient dans ce cas de disposer les plots et/ou les cordons selon un triangle non équilatéral de manière à faire coïncider les centres de gravité en question, et donc de les placer angulairement selon un autre schéma géométrique.

De même, les plots d'isolation 40 et les cordons longitudinaux 60 peuvent être disposés respectivement sur des plans et/ou des circonférences différent(e)s.

Enfin, il est également envisageable de choisir des taux de compression différents pour chacun des plots d'isolation 40 et/ou des cordons longitudinaux 60 afin de pallier la répartition géométrique non homogène des plots et/ou des cordons sur une même circonférence et/ou un même plan.

Idéalement, il convient de disposer les plots d'isolation 40 et les cordons longitudinaux 60 de sorte que le centre gravité de l'ensemble constitué par le moteur et sa roue à aubes soit placé au plus près des barycentres respectifs desdits plots et desdits cordons.

## Revendications

1. Support (10) pour moteur (100), notamment de pulseur d'appareil de chauffage, de ventilation, et/ou de climatisation de véhicule automobile, le moteur présentant un axe de révolution (XX') et le support (10) comprenant un manchon creux (20) sensiblement cylindrique destiné à recevoir le moteur (100), un boîtier de fixation (30) destiné à recevoir le manchon creux (20), et des moyens (50 ; 70) d'absorption de vibrations surmoulés sur le boîtier de fixation (30).
**caractérisé en ce que** les moyens (70) d'absorption des vibrations comprennent au moins un cordon longitudinal (60) coopérant avec une paroi externe (21) du manchon (20).

2. Support selon la revendication 1, **caractérisé en ce que** le manchon (20) est muni d'au moins un doigt (24) de guidage.

3. Support selon la revendication 2, **caractérisé en ce que** les moyens (50) d'absorption des vibrations comprennent au moins un plot (40) coopérant avec le doigt (24) de guidage.

4. Support selon la revendication 3, **caractérisé en ce que** chaque plot (40) présente la forme d'un cylindre et un orifice central traversant (42) dans lequel est ajusté le doigt (22) de guidage du manchon (20).

5. Support selon la revendication 3 ou 4, **caractérisé en ce que** chaque plot (40) mesure sensiblement de 4 à 10 mm de hauteur axiale.

6. Support selon l'une quelconque des revendications 3 à 5, **caractérisé en ce que** chaque plot (40) présente une épaisseur radiale de matière autour de l'orifice (42) d'au moins 2 mm.

7. Support selon l'une quelconque des revendications 3 à 6, **caractérisé en ce que** les plots d'isolation (40) sont au nombre de trois.

8. Support selon l'une quelconque des revendications précédentes, **caractérisé en ce que** le cordon longitudinal (60) est solidaire d'une paroi interne (33) du support de fixation (30) et est en contact avec la paroi externe (21) du manchon (20).

9. Support selon la revendication 8, **caractérisé en ce que** les cordons longitudinaux (60) sont au nombre de trois.

10. Support selon l'une quelconque des revendications précédentes, **caractérisé en ce que** chaque cordon (60) présente une longueur axiale d'au moins 20 mm.

11. Support selon l'une quelconque des revendications précédentes, **caractérisé en ce que** chaque cordon (60) présente une d'épaisseur radiale d'au moins 1 mm.

12. Support selon les revendications 7 et 9, **caractérisé en ce que** les plots d'isolation (40) et les cordons (60) sont alternés et décalés angulairement les uns par rapport aux autres d'environ 60°.

13. Support selon l'une quelconque des revendications 3 à 12, **caractérisé en ce que** les plots (40) et/ou les cordons (60) sont surmoulés d'une seule pièce sur le boîtier de fixation (30).

14. Support selon l'une quelconque des revendications précédentes, **caractérisé en ce que** les moyens d'absorption des vibrations (50 ; 70) sont à base d'un matériau élastiquement déformable, tel qu'un élastomère.

15. Support selon la revendication 14, **caractérisé en ce que** le matériau est un élastomère thermoplastique ayant une dureté Shore comprise entre environ 20 et 30.

## Claims

1. Support (10) for a motor (100), particularly a motor vehicle heating, ventilation and/or air-conditioning unit blower, the motor having an axis of revolution (XX') and the support (10) comprising a more or less cylindrical hollow sleeve (20) intended to accept the motor (100), a fixing housing (30) intended to accept the hollow sleeve (20), and vibration-absorbing means (50; 70), overmolded onto the fixing housing (30),
**characterized in that** the vibration-absorbing means (70) comprise at least one longitudinal strand (60) collaborating with an external wall (21) of the sleeve (20).

2. Support according to Claim 1, **characterized in that** the sleeve (20) is equipped with at least one guide finger (24).

3. Support according to Claim 2, **characterized in that** the vibration-absorbing means (50) comprise at least one pad (40) collaborating with the guide finger (24).

4. Support according to Claim 3, **characterized in that** each pad (40) is in the shape of a cylinder and has a central through-orifice (42) into which the guide finger (22) of the sleeve (20) fits.

5. Support according to Claim 3 or 4, **characterized in that** each pad (40) measures more or less 4 to 10 mm in axial height.

6. Support according to any one of Claims 3 to 5, **characterized in that** each pad (40) has a radial thickness of material of at least two mm around the orifice (42).

7. Support according to any one of Claims 3 to 6, **characterized in that** the insulating pads (40) are three in number.

8. Support according to any one of the preceding claims, **characterized in that** the longitudinal strand (60) is secured to an internal wall (33) of the fixing support (30) and is in contact with the external wall (21) of the sleeve (20).

9. Support according to Claim 8, **characterized in that** the longitudinal strands (60) are three in number.

10. Support according to any one of the preceding claims, **characterized in that** each strand (60) has an axial length of at least 20 mm.

11. Support according to any one of the preceding claims, **characterized in that** each strand (60) has a radial thickness of at least 1 mm.

12. Support according to Claims 7 and 9, **characterized in that** the insulating pads (40) and the strands (60) alternate with and are angularly offset by about 60° with respect to one another.

13. Support according to any one of Claims 3 to 12, **characterized in that** the pads (40) and/or the strands (60) are overmolded as a single piece onto the fixing housing (30).

14. Support according to any one of the preceding claims, **characterized in that** the vibration-absorbing means (50; 70) are based on an elastically deformable material such as an elastomer.

15. Support according to Claim 14, **characterized in that** the material is made of a thermoplastic elastomer having a Shore hardness of between about 20 and 30.

## Patentansprüche

1. Träger (10) für Motor (100), insbesondere für ein Heizgerät-, Belüftungs- und/oder Klimaanlagengebläse eines Kraftfahrzeugs, wobei der Motor eine Drehachse (XX') aufweist und der Träger (10) eine im Wesentlichen zylindrische Hohlmuffe (20) aufweist, die dazu bestimmt ist, den Motor (100) aufzunehmen, ein Befestigungsgehäuse (30) zum Aufnehmen der Hohlmuffe (20) und Vibrationsabsorptionsmittel (50; 70), die auf dem Befestigungsgehäuse (30) abgeformt sind,
**dadurch gekennzeichnet, dass** die Vibrationsabsorptionsmittel (70) mindestens einen Längsstreifen (60) aufweisen, der mit einer Außenwand (21) der Muffe (20) zusammenwirkt.

2. Träger nach Anspruch 1, **dadurch gekennzeichnet, dass** die Muffe (20) mit mindestens einem Führungsfinger (24) versehen ist.

3. Träger nach Anspruch 2, **dadurch gekennzeichnet, dass** die Vibrationsabsorptionsmittel (50) mindestens einen Klotz (40) aufweisen, der mit dem Führungsfinger (24) zusammenarbeitet.

4. Träger nach Anspruch 3, **dadurch gekennzeichnet, dass** jeder Klotz (40) die Form eines Zylinders und eine durchgehende zentrale Öffnung (42) aufweist, in der der Führungsfinger (22) der Muffe (20) justiert ist.

5. Träger nach Anspruch 3 oder 4, **dadurch gekennzeichnet, dass** jeder Klotz (40) im Wesentlichen 4 bis 10 mm axiale Höhe misst.

6. Träger nach einem der Ansprüche 3 bis 5, **dadurch gekennzeichnet, dass** jeder Klotz (40) eine radiale Materialstärke von mindestens 2 mm um die Öffnung (42) aufweist.

7. Träger nach einem der Ansprüche 3 bis 6, **dadurch gekennzeichnet, dass** es drei Isolierklötze (40) gibt.

8. Träger nach einem der vorhergehenden Ansprüche, **dadurch gekennzeichnet, dass** der Längsstreifen (60) fest mit einer Innenwand (33) des Befestigungsträgers (30) verbunden und mit der Außenwand (21) der Muffe (20) in Berührung ist.

9. Träger nach Anspruch 8, **dadurch gekennzeichnet, dass** es drei Längsstreifen (60) gibt.

10. Träger nach einem der vorhergehenden Ansprüche, **dadurch gekennzeichnet, dass** jeder Streifen (60) eine axiale Länge von mindestens 20 mm aufweist.

11. Träger nach einem der vorhergehenden Ansprüche, **dadurch gekennzeichnet, dass** jeder Streifen (60) eine radiale Stärke von mindestens 1 mm aufweist.

12. Träger nach den Ansprüchen 7 und 9, **dadurch gekennzeichnet, dass** die Isolierklötze (40) und die Streifen (60) abgewechselt werden und winkelig zueinander um etwa 60° versetzt sind.

13. Träger nach einem der Ansprüche 3 bis 12, **dadurch gekennzeichnet, dass** die Klötze (40) und/oder die Streifen (60) aus einem Stück auf das Befestigungsgehäuse (30) abgeformt sind.

14. Träger nach einem der vorhergehenden Ansprüche, **dadurch gekennzeichnet, dass** die Vibrationsabsorptionsmittel (50; 70) auf der Basis eines elastisch verformbaren Materials, wie zum Beispiel eines Elastomers, hergestellt werden.

15. Träger nach Anspruch 14, **dadurch gekennzeichnet, dass** das Material ein Thermoplastelastomer mit einer Shore-Härte zwischen etwa 20 und 30 ist.
